# EUROPÄISCHE PATENTSCHRIFT

(11) **EP 1 055 242 B1**
(45) Veröffentlichungstag und Bekanntmachung des Hinweises auf die Patenterteilung: **11.09.2002**
(21) Anmeldenummer: 99904872.1
(22) Anmeldetag: 09.02.1999
(51) Int. Cl.: H01F 1/00, H01F 1/44, G01N 33/543, G11B 5/712

(54) **EDELMETALL-GESCHÜTZTE, ANTIKORROSIVE MAGNETISCHE NANOKOLLOIDE**
ANTICORROSIVE MAGNETIC NANOCOLLOIDS PROTECTED BY PRECIOUS METALS
NANOCOLLOIDES MAGNETIQUES ANTICORROSION PROTEGES PAR DES METAUX PRECIEUX

(30) Priorität: 14.02.1998 DE 19806167
(43) Veröffentlichungstag der Anmeldung: 29.11.2000
(73) Patentinhaber: Studiengesellschaft Kohle mbH, 45470 Mülheim an der Ruhr (DE); Fraunhofer-Gesellschaft zur Förderung der angewandten Forschung e.V., 80636 München (DE)
(72) Erfinder: BÖNNEMANN, Helmut, D-45470 Mülheim an der Ruhr (DE); BRIJOUX, Werner, D-45470 Mülheim an der Ruhr (DE); BRINKMANN, Rainer, D-45470 Mülheim an der Ruhr (DE); WAGENER, Michael, D-28717 Bremen (DE)
(74) Vertreter: von Kreisler, Alek, Dipl.-Chem.
(86) Internationale Anmeldenummer: EP9900835
(87) Internationale Veröffentlichungsnummer: WO99041758

(56) Entgegenhaltungen:
- EP-A- 0 423 627
- WO-A-90/15423
- RIVAS J ET AL: "STRUCTURAL AND MAGNETIC CHARACTERIZATION OF CO PARTICLES COATED WITH AG" JOURNAL OF APPLIED PHYSICS, Bd. 76, Nr. 10, PART 02, 15. November 1994, Seiten 6564-6566, XP000508785
- PATENT ABSTRACTS OF JAPAN vol. 008, no. 111 (E-246), 24. Mai 1984 & JP 59 027505 A (HITACHI MAXELL KK), 14. Februar 1984

## Beschreibung

Die vorliegende Erfindung betrifft neue, ein- und mehrmetallische, magnetische Kolloid-Partikel (z. B. Fe, Co, Ni, Fe/Co) der Größe bis zu 20nm, deren Oberfläche mit Edelmetallen z. B. Pd, Ag, Pt oder Au, vor oxidation geschützt ist sowie ein

Verfahren zur Herstellung von Edelmetall-geschützten, antikorrosiven Metallund Legierungskolloiden, dadurch gekennzeichnet, dass zuvor oder in-situ hergestellte magnetische Nanokolloide in Lösung mit starken Reduktionsmitteln behandelt werden, die ausgewählt sind aus der Gruppe bestehend aus Hydriden der Elemente der Hauptgruppen 1 bis 3 des Periodensystems der Elemente, komplexen Hydriden derselben Elemente und des Tetraalkylammoniums und reduzierend wirkenden metallorganischen Verbindungen der Elemente der Hauptgruppen 1 bis 4, und die resultierenden Mischungen mit Edelmetallsalzen versetzt werder.

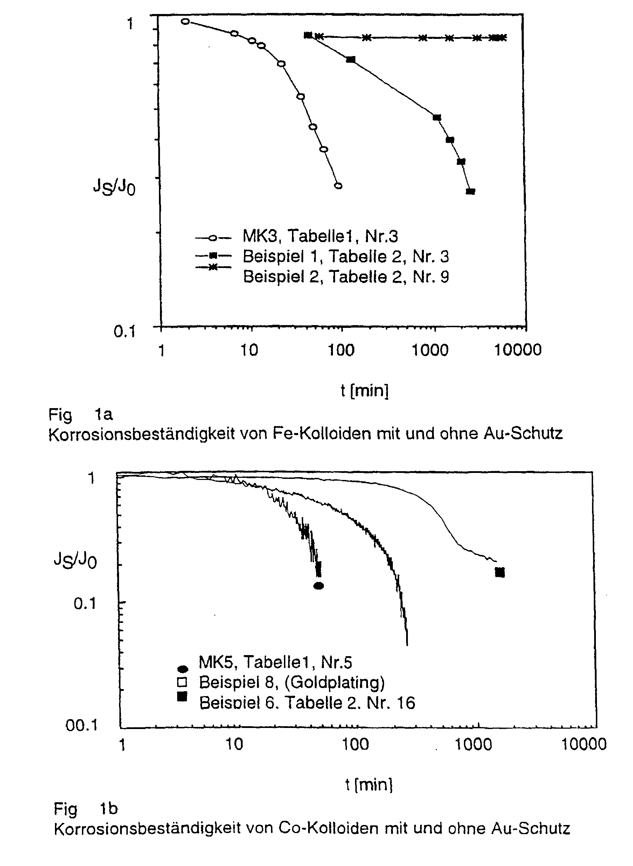

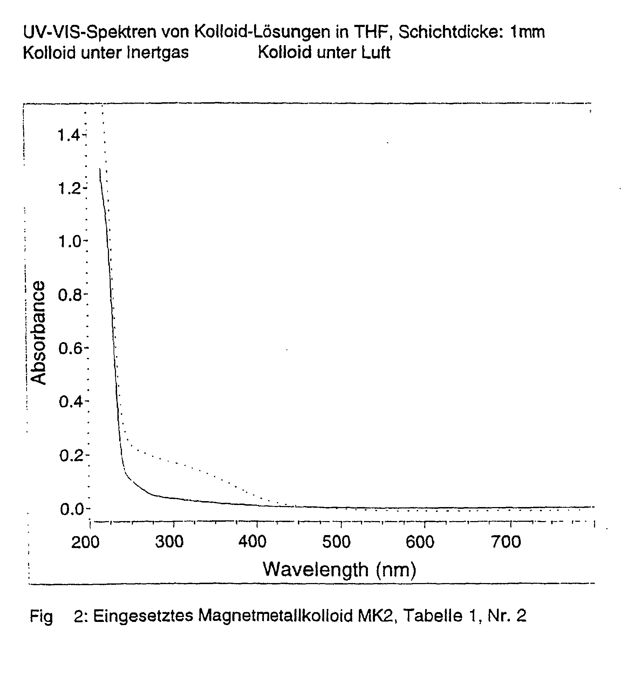

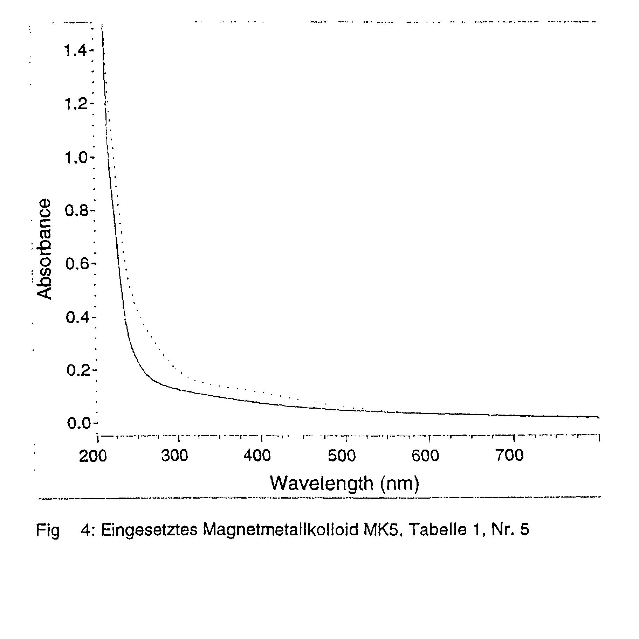

Zur Herstellung ungeschützter, kolloidaler Magnetmetalle, insbesondere für Fe, Co, Ni, sind verschiedene Verfahren bekannt, z. B. Salzreduktion (G. Schmid (Ed.), *Clusters and Colloids*, VCH, 1994, EP 423 627 DE 4443 705 und USP 5,620,584) thermische, fotochemische und sonochemische Zersetzung von Metall-Carbonylen und Nitrosylkomplexen (K. S. Suslick, T. Hyeon, M. Fang, A. A. Cichowlas in: W. Moser (Ed.), *Advanced Catalysts and Nanostructured Materials, Chapter 8, pag. 197*, Academic Press, 1996) sowie die Reduktion von Salzen bzw. die Zersetzung von Carbonylverbindungen in mizellaren Lösungen (O. A. Platonova, L. M. Bronstein, S. P. Solodovnikov, I. M. Yanovskaya, E. S. Obolonkova, P. M. Valetsky, E. Wenz, M. Antonietti, *Colloid Polym. Sci. 275,* 1997, 426). Die Langzeitstabilität solcher bisher vorgeschlagenen, kolloidalen Magnetmetalle gegen Luftsauerstoff ist jedoch unbefriedigend (siehe Vergleichsbeispiele: Tabelle 1, Nr. 2, 3 und 5, Abbildungen 1a, 2 und 4).

Ziel der vorliegenden Erfindung ist daher die Schaffung eines Verfahrens zur Herstellung oxidationsstabiler, kolloidaler magnetischer Nanometalle der Größe bis 20nm durch Schützen der Partikeloberfläche gegen korrosiven Angriff mittels Edelmetallauflage.

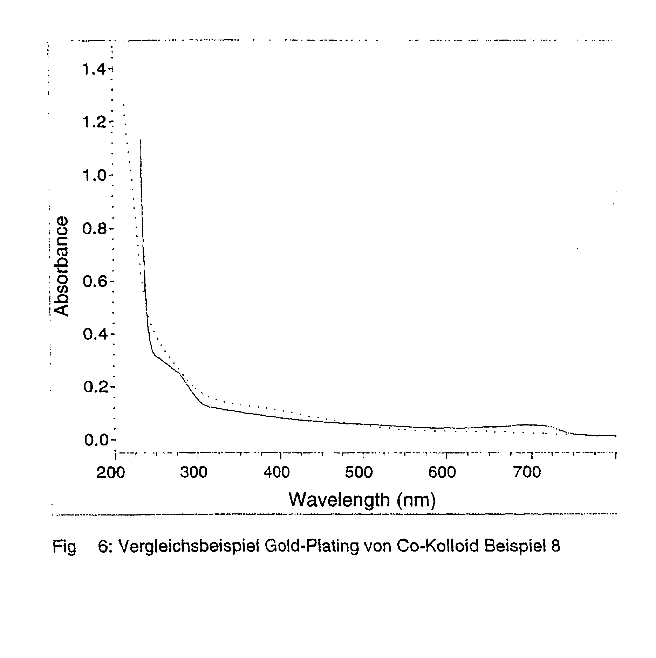

Das japanische Patent JP 0727 2922 AZ beschreibt die Herstellung von antikorrosiven, harzgebundenen Fe-Magneten, die durch dreifache Beschichtung u. a. mit Edelmetallen geschützt sind. Dabei handelt es sich jedoch ausschließlich um beschichtete, magnetische Bulkmaterialien, die in der Nanotechnologie und für Magnetfluide nicht geeignet sind. Ein Verfahren zur Herstellung von Edelmetall-geschützten, magnetischen Nanokolloidpartikeln bis 20nm ist nicht bekannt. Toshima et al. beschreiben die Darstellung von Pd-Pt-Bimetallkolloiden (1,5 - 5,5nm) mit kontrollierbarer Kern-Schale-Struktur (Y. Wang and N. Toshima, *J. Phys Chem. B,* 1997, 101, 5301). Schmid et al. beschreiben die Herstellung von goldumhüllten Pd-Partikel einer Größe von 20 - 56nm mit Schichtstruktur (G. Schmid, H. West, J.-O. Malm, J.-O. Bovin, and C. Grenthe, *Chem. Eur. J.* 1996, 1099). Die genannten Verfahren lassen jedoch sich auf die Kombination Magnetmetall (Fe, Co, Ni) und Edelmetallhülle nicht übertragen. J. Sinzig versuchte die Partikeloberfläche eines N(Octyl)₄-stabilisierten Co-Kolloids durch chemisches "Plating" mit elementarem Gold gegen Korrosion zu schützen (J. Sinzig, Proefschrift, S,74, Rijksuniversiteit te Leiden (NL) 1997). Dabei tritt an der Co-Oberfläche folgender Redoxvorgang auf: 12Co⁽⁰⁾ + 2 AuCl₃ → CogAu₂ + 3 CoCl₂. Auf diese Weise läßt sich die Oxidationsstabilität des Materials zwar verbessern, ist aber für die genannten Anwendungen noch unzureichend (siehe Vergleichsbeispiel: Beispiel Nr. 8, Tabelle 1 Nr. 6, Abbildungen 1b und 6).

Es wurde nun überraschend gefunden, daß korrosionsstabile, magnetische Nanokolloide erhältlich sind, indem man z. B. Fe-, Co-, Ni- oder legierte Fe/Co-Kolloide, nach Literatur-bekannten Verfahren (s. o.) hergestellt oder "in-situ" erzeugt, unter strengstem Ausschluß von Luftsauerstoff in organischen Lösemitteln mit starken Reduktionsmitteln behandelt, z. B. Hydride der Elemente der Hauptgruppen 1 bis 3 des Periodensystems der Elemente, komplexe Hydride derselben Elemente oder des Tetraalkylammoniums oder reduzierend wirkende metallorganische Verbindungen der Hauptgruppen 1 bis 4 des Periodensystems der Elemente, und zu dieser Mischung Edelmetallsalze, z. B. des Pd, Ag, Pt oder Au, vorzugsweise in Lösung, im Molverhältnis (Kolloid : Edelmetallsalz) >1:1 vorzugsweise 1:0,3 zugibt. Als Lösemittel können hierbei Aliphaten, Aromaten, Ether und als Reduktionsmittel z. B. die obengenannten Hydride und metallorganische Verbindungen im Molverhältnis (Reduktionsmittel : Kolloid) von mindestens 1:1, vorzugsweise >3:1 verwendet werden.

Die so erhaltenen Edelmetall-geschützten, antikorrosiven magnetischen Nanokolloide der Größe bis 20nm sind langzeitstabil, z. B. ist bei dem Augeschützten Fe-Kolloid bis zum Abbruch der Messung nach 100 Stunden keine Abnahme der Magnetisierung J durch Korrosion festzustellen. Die Materialien können in isolierter Form oder in Lösung, ohne ihre Verwendung einschränken zu wollen, z. B. als Dichtmedium gegen Staub und Gase in Magnetfluiddichtungen (flüssiger O-Ring), zur Schmierung und Lagerung rotierender Wellen (magnetisches Levitationslager), zur magnetooptischen Informationsspeicherung, z. B. in Compact- und Minidisks, und ferner, nach Aufbringung einer weiteren zellverträglichen Beschichtung, zur magnetischen Markierung von Zellen und deren magnetische Separation in biologischen Proben oder zur Lokalapplikation von Medikamenten eingesetzt werden. Die überlegene Korrosionsstabilität der neuen Materialien im Vergleich zu nicht geschützten, magnetischen Nanokolloiden gleicher Größe ist anhand der nachfolgenden Beispiele dargestellt (Beispiele 1 bis 7, Tabelle 2, Abbildungen 1a, 1b, 3 und 5).

### Beispiel 1

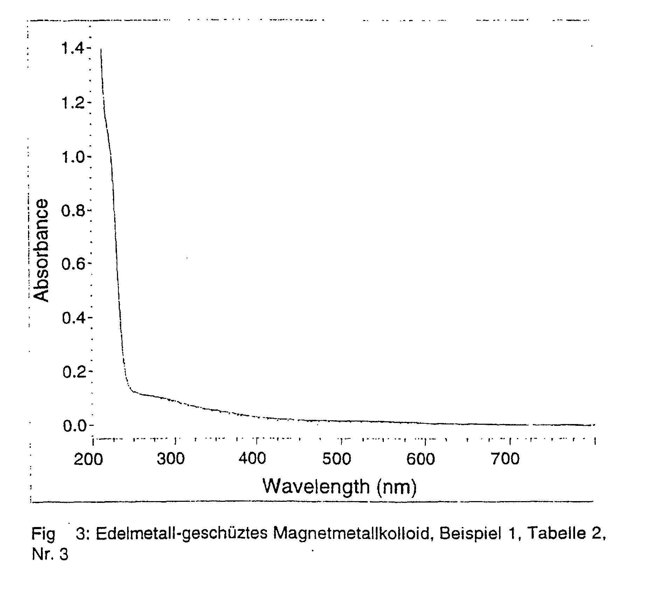

1,3g (1,43mmol Fe) Fe-Kolloid (Kennung: MK2) werden unter Schutzgas Argon in einem 500ml-Kolben in 50ml THF gelöst und mit einer Lösung von 2,61g (4,61mmol) (C₈H₁₇)₄NBEt₃H in 27ml THF versetzt. Hierzu tropft man unter Lichtausschluß bei Raumtemperatur innerhalb 14h eine Lösung von 0,146g (0,48mmol) AuCl₃ in 185ml THF. Von evtl. ausgefallenen Reaktionsprodukten filtriert man über eine D4-Glasfritte ab und engt die resultierende Lösung ein. Nach 3h Trocknen im Vakuum (0,1Pa) bei 40°C erhält man 5,5g braunschwarzes, wachsartiges, Au-geschütztes Fe-Kolloid. (Tabelle 2, Nr. 3, Abbildungen 1a und 3)
Zur Bestimmung der Magnetisierung wird 1g eines getrockneten Metallkolloides in 2ml Lösungsmittel (Toluol, THF) redispergiert und in einem offenen zylindrischen Glasgefäß mit einem Durchmesser von 2cm auf der Magnetwaage plaziert. Bei der Verwendung eines NdFeB-Magneten mit einer hohen Magnetfeldstärke von B_{R} = 1.1T und einem geringen Abstand Magnet zu Metallkolloid von 5mm, kann davon ausgegangen werden, daß die Kolloidpartikel in der Flüssigkeit magnetisch gesättigt sind. Daher ist das zur Zeit t gemessene Gewichtsverhältnis G₀/G(t) gleich dem Verhältnis der Magnetisierung zur Zeit t zur Anfangsmagnetisierung: J(t)/J₀.

### Beispiel 2

Man verfährt wie in Beispiel 1, verwendet jedoch 0,287g (3mmol Fe) Fe-Kolloid (Kennung: MK3) in 100ml THF, 5,55g (9,8mmol) (C₈H₁₇)₄NBEt₃H gelöst in 58ml THF, tropft 0,3g (1mmol) AuCl₃ gelöst in 377ml THF innerhalb 14h zu und erhält 13,5g braunschwarzes, viskoses, Au-geschütztes Fe-Kolloid. (Tabelle 2, Nr. 9, Abbildung 1a)

### Beispiel 3

Man verfährt wie in Beispiel 1, verwendet jedoch 0,9g (1mmol Fe) Fe-Kolloid (Kennung: MK2) in 40ml THF, versetzt mit 0,55g (1,5mmol) Al(octyl)₃ und tropft 0,1g (0,33mmol) AuCl₃ gelöst in 94ml THF innerhalb 16h zu und erhält 2,2g braunschwarzes, Au-geschütztes Fe-Kolloid. (Tabelle 2, Nr. 7)

### Beispiel 4

Man verfährt wie in Beispiel 1, verwendet jedoch 2,9g (3,2mmol Fe) Fe-Kolloid (Kennung: MK2) in 80ml THF, 6,0g (10,6mmol) (C₈H₁₇)₄NBEt₃H gelöst in 32ml THF und tropft 0,37g (1,1mmol) PtCl₄ gelöst in 306ml THF innerhalb 16h zu. Man erhält 14,5g Pt-geschütztes Fe-Kolloid. (Tabelle 2, Nr. 13)

### Beispiel 5

Man verfährt wie in Beispiel 1, verwendet jedoch 0,9g (1,1mmol Fe) Fe-Kolloid (Kennung: MK4) in 40ml THF, 0,18g (1,7mmol) LiBEt₃H gelöst in 2ml THF und tropft 0,11g (0,36mmol) AuCl₃ gelöst in 112ml THF innerhalb 16h zu. Man erhält 1,3g Au-geschütztes Fe-Kolloid. (Tabelle 2, Nr. 11)

### Beispiel 6

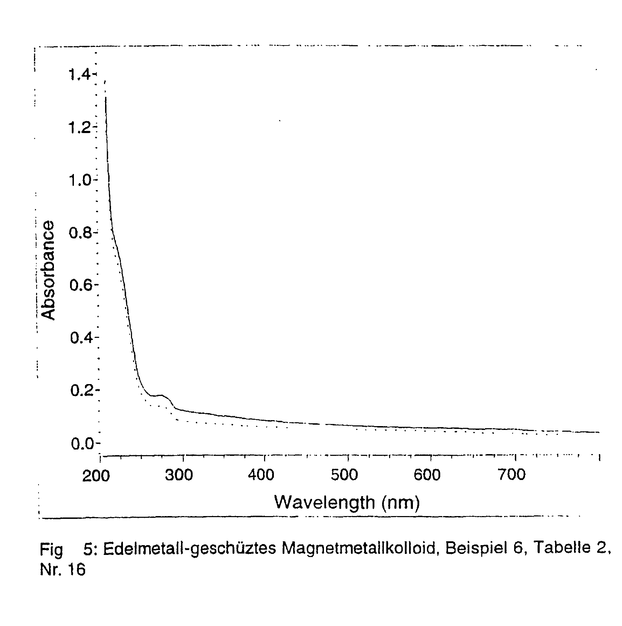

Man verfährt wie in Beispiel 1, verwendet jedoch 3,1g (3mmol Co) Co-Kolloid (Kennung: MK5) in 300ml THF, 5,43g (9,6mmol) (C₈H₁₇)₄NBEt₃H gelöst in 33ml THF, tropft 0,3g (1mmol) AuCl₃ gelöst in 500ml THF innerhalb 18h zu. Man erhält 13,5g dunkelbraunes, wachsartiges, Au-geschütztes Co-Kolloid. (Tabelle 2, Nr. 16, Abbildungen 1b und 5)

### Beispiel 7

Man verfährt wie in Beispiel 1, verwendet jedoch 0,83g (5mmol Co) Co-Kolloid (Kennung: MK7) in 300ml THF, 5,43g (9,6mmol) (C₈H₁₇)₄NBEt₃H gelöst in 33ml THF und tropft 0,3g (1 mmol) AuCl₃ gelöst in 300ml THF innerhalb 16h zu. Man erhält 7,2g schwarzbraunes, viskoses, Au-geschütztes Co-Kolloid. (Tabelle 2, Nr.17)

### Beispiel 8 (Vergleichsbeispiel Gold-Plating von Co-Kolloid)

Man löst 6,5g (6mmol Co) Co-Kolloid (Kennung: MK6) unter Schutzgas Argon in einem 500ml-Kolben in 250ml Toluol und versetzt bei Raumtemperatur mit 0,3g (1mmol) festem AuCl₃. Innerhalb von 16h löst sich das AuCl₃ auf, und es bildet sich eine braunschwarze Lösung mit geringen Mengen eines feinverteilten, grauschwarzen Niederschlages. Man trennt hiervon über eine D4-Glasfritte ab und erhält nach Einengen und 3h Trocknen in Vakuum (0,1Pa) bei 30°C 6,8g schwarzes, festes Co-Au-Kolloid. (Abbildungen 1b und 6)

**Tabelle 1:**

| Eingesetzte Magnetmetallkolloide | | | | |
|---|---|---|---|---|
| Nr. | Metallkolloid | | mittlere Partikelgröße [nm] | Kennung |
| | Metall | Stabilisator | | |
| 1 | Fe | (C₈H₁₇)₄NCl | 2-3 | MK1 |
| 2 | Fe | (C₈H₁₇)₄NBr | 3-4 | MK2 |
| 3 | Fe | N-Lauroylsarkosin Na-Salz | 5-6 | MK3 |
| 4 | Fe | 2-(Dimethyldodecylammonio)acetat | - | MK4 |
| | | *Rewoteric AM DML,* | | |
| 5 | Co | (C₈H₁₇)₄NCl | 2-3 | MK5 |
| 6 | Co | (C₈H₁₇)₄NBr | 2-3 | MK6 |
| 7 | Co | *Korantin SH* (BASF) | 7-11 | MK7 |
| 8 | Ni | (C₈H₁₇)₄NCl | 2-3 | MK8 |
| 9 | Fe2Co | (C₈H₁₇)₄NBr | 2-3 | MK9 |

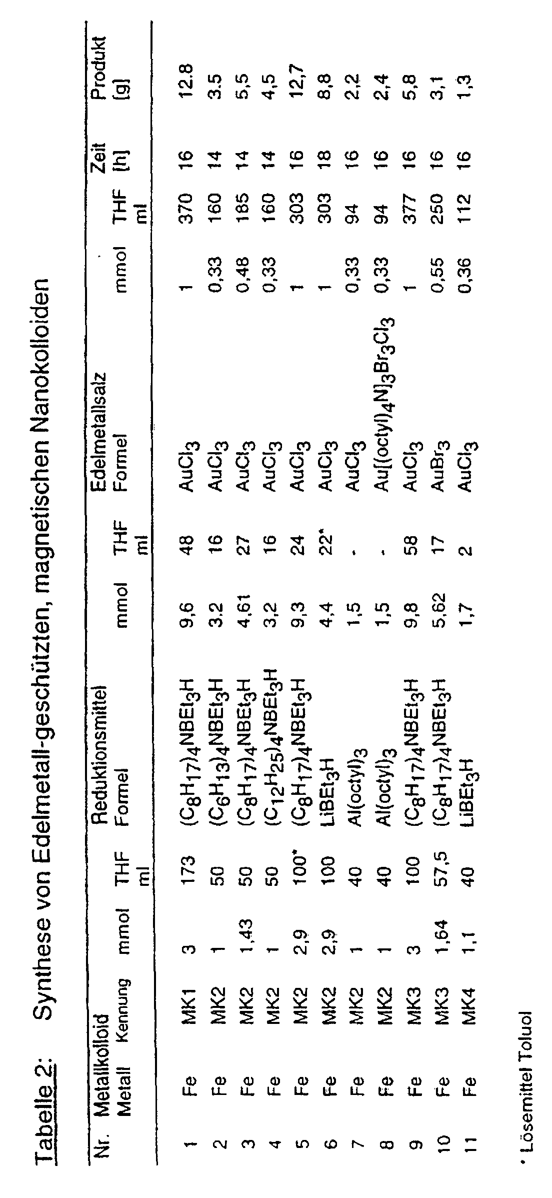

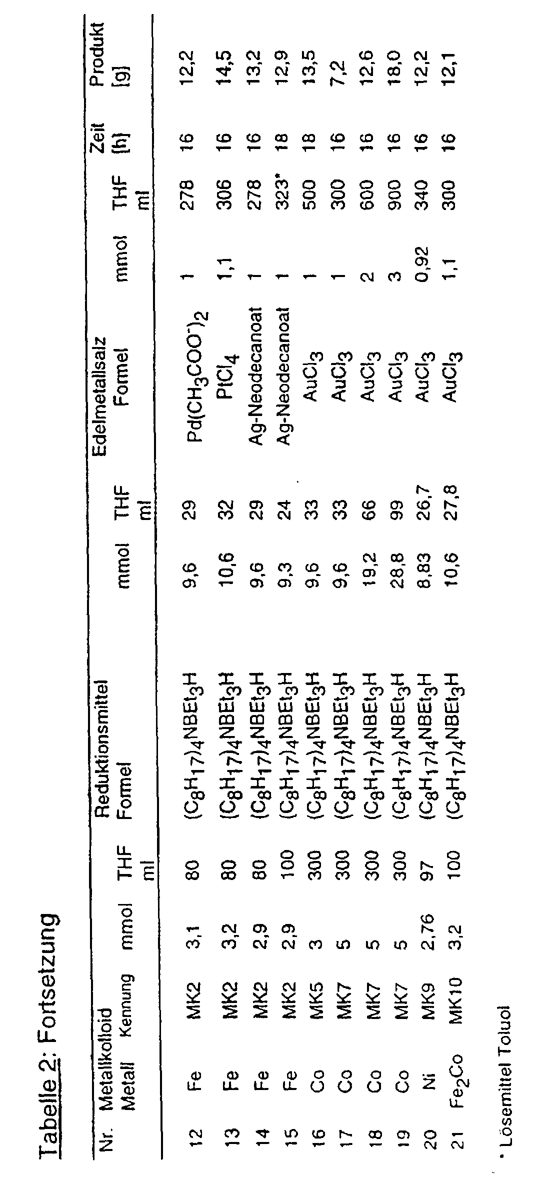

## Patentansprüche

1. Verfahren zur Herstellung von Edelmetall-geschützten, antikorrosiven Metallund Legierungskolloiden, **dadurch gekennzeichnet, dass** zuvor oder in-situ hergestellte magnetische Nanokolloide in Lösung mit starken Reduktionsmitteln behandelt werden, die ausgewählt sind aus der Gruppe bestehend aus Hydriden der Elemente der Hauptgruppen 1 bis 3 des Periodensystems der Elemente, komplexen Hydriden derselben Elemente und des Tetraalkylammoniums und reduzierend wirkenden metallorganischen Verbindungen der Elemente der Hauptgruppen 1 bis 4, und die resultierenden Mischungen mit Edelmetallsalzen versetzt werden.

2. Verfahren nach Anspruch 1, wobei als zuvor oder in-situ hergestellte magnetische Nanokolloide Fe-, Co-, Ni- oder Fe/Co-Kolloide eingesetzt werden.

3. Magnetische Nanokolloide mit einer Partikelgröße von kleiner 20nm, **dadurch gekennzeichnet, dass** die magnetischen Partikel mit einer Edelmetallhülle versehen sind und ausweislich ihres Magnetogramms sowie ihrer UV/Vis-Spektren länger als 3 Stunden gegen Oxidation stabil sind.

4. Magnetische Nanokolloide nach Anspruch 3, wobei als Edelmetall Au und als magnetische Partikel Fe eingesetzt werden und die länger als 100 Stunden gegen Oxidation stabil sind.

5. Magnetische Nanokolloide nach Anspruch 3, wobei als Edelmetall Au und als magnetische Partikel Co eingesetzt werden und die länger als 20 Stunden gegen Oxidation stabil sind.

6. Verwendung der magnetischen Nanokolloide entsprechend den Ansprüchen 3 bis 5 als magnetische Flüssigkeit mit hoher Sättigungsmagnetisierung bei gleichzeitig niedrigem Füllgehalt in einer Magnetfluiddichtung.

7. Verwendung der magnetischen Nanokolloide entsprechend den Ansprüchen 3 bis 5 durch Aufbringung einer weiteren, zellverträglichen Beschichtung als magnetische Zellmarkierung.

8. Verwendung der magnetischen Nanokolloide entsprechend den Ansprüchen 3 bis 5 zur magnetischen Zellseparation.

9. Verwendung der magnetischen Nanokolloide entsprechend den Ansprüchen 3 bis 5 zur magnetooptischen Informationsspeicherung.

## Claims

1. A process for the preparation of precious-metal protected, anticorrosive metal and alloy colloids, **characterized in that** previously prepared or *in situ* prepared magnetic nanocolloids are treated in a solvent with strong reductants selected from hydrides of elements from main groups 1 to 3 of the Periodic Table, complex hydrides of these elements or of tetraalkylammonium, or reducing organometallic compounds of elements from main groups 1 to 4, and precious metal salts are added to the resulting mixtures.

2. The process according to claim 1, wherein Fe, Co, Ni or Fe/Co colloids are employed as said previously prepared or *in situ* prepared magnetic nanocolloids.

3. Magnetic nanocolloids having a particle size of smaller than 20 nm, **characterized in that** said magnetic particles are provided with a precious-metal coating and are stable towards oxidation for more than 3 hours as seen from their magnetogram and their UV/Vis spectra.

4. The magnetic nanocolloids according to claim 3, wherein Au is employed as said precious metal, and Fe as said magnetic particles, and said nanocolloids are stable towards oxidation for more than 100 hours.

5. The magnetic nanocolloids according to claim 3, wherein Au is employed as said precious metal, and Co as said magnetic particles, and said nanocolloids are stable towards oxidation for more than 20 hours.

6. Use of the magnetic nanocolloids according to claims 3 to 5 as a magnetic fluid having a high saturation magnetization and at the same time a low filler content in a magnetic fluid seal.

7. Use of the magnetic nanocolloids according to claims 3 to 5 as a magnetic cell label after applying an additional cell-compatible coating.

8. Use of the magnetic nanocolloids according to claims 3 to 5 for magnetic cell separation.

9. Use of the magnetic nanocolloids according to claims 3 to 5 for magnetooptical storage of information.

## Revendications

1. Procédé de fabrication de colloïdes métalliques et d'alliages anticorrosifs et protégés par un métal noble, **caractérisé en ce que** des nano-colloïdes magnétiques préparés au préalable ou in situ sont traités en solution avec des agents de réduction forts qui sont sélectionnés parmi le groupe composé d'hydrures des éléments des groupes principaux 1 à 3 de la classification périodique des éléments, d'hydrures complexes de ces éléments et du tétraalkylammonium, et de composés organométalliques, agissant de façon réductrice, des éléments des groupes principaux 1 à 4, et **en ce que** les mélanges obtenus sont mélangés avec des sels de métaux nobles.

2. Procédé selon la revendication 1, dans lequel on utilise en tant que nano-colloïdes magnétiques fabriqués au préalable ou in situ des colloïdes de Fe, Co, Ni ou Fe/Co.

3. Nano-colloïdes magnétiques présentant une taille de particules inférieure à 20 nm, **caractérisés en ce que** les particules magnétiques sont pourvues d'une enveloppe de métal noble et sont stables à l'oxydation selon leur magnétogramme et leurs spectres UV/visibles pendant une durée supérieure à 3 heures.

4. Nano-colloïdes magnétiques selon la revendication 3, dans lesquels on utilise en tant que métal noble Au et en tant que particules magnétiques Fe, et qui sont stables à l'oxydation pendant une durée supérieure à 100 heures.

5. Nano-colloïdes magnétiques selon la revendication 3, dans lesquels on utilise en tant que métal noble Au et en tant que particules magnétiques Co, et qui sont stables à l'oxydation pendant une durée supérieure à 20 heures.

6. Utilisation des nano-colloïdes magnétiques selon les revendications 3 à 5 en tant que liquide magnétique présentant une saturation magnétique avec faible teneur en matière de charge simultanée dans une garniture pour liquides magnétiques.

7. Utilisation des nano-colloïdes magnétiques selon les revendications 3 à 5 par application d'un autre revêtement compatible avec les cellules en tant que marquage magnétique de cellules.

8. Utilisation des nano-colloïdes magnétiques selon les revendications 3 à 5 pour une séparation magnétique des cellules.

9. Utilisation des nano-colloïdes magnétiques selon les revendications 3 à 5 pour un stockage d'informations magnéto-optiques.
